# EUROPEAN PATENT SPECIFICATION

(11) **EP 3 148 736 B1**
(45) Date of publication and mention of the grant of the patent: **26.12.2018**
(21) Application number: 15719761.7
(22) Date of filing: 08.05.2015
(51) Int. Cl.: B23D 61/18, B23D 65/00, B28D 1/12, F16G 11/04, F16G 11/02

(54) **METAL SLEEVE FOR CARRYING THE ABRASIVE LAYER OF A SAW BEAD IN A SAW CORD AND METHOD TO PRODUCE THE SAME**
METALLHÜLLE ALS TRÄGER DER SCHLEIFSCHICHT EINES SÄGEKÜGELCHENS IN EINEM SÄGEBAND UND VERFAHREN ZUR HERSTELLUNG DAVON
MANCHON MÉTALLIQUE POUR SUPPORTER LA COUCHE ABRASIVE D'UNE PERLE DANS UN CÂBLE DE SCIE ET PROCÉDÉ POUR SA PRODUCTION

(30) Priority: 27.05.2014 EP 14170000
(43) Date of publication of application: 05.04.2017
(73) Proprietor: NV Bekaert SA, 8550 Zwevegem (BE)
(72) Inventor: BAEKELANDT, Tom, 9052 Zwijnaarde (BE); DERYCKE, Steven, 9880 Aalter (BE)
(74) Representative: Seynhaeve, Geert Filiep
(86) International application number: PCT/EP2015/060210
(87) International publication number: WO 2015/180947

(56) References cited:
- EP-A1- 2 548 683
- EP-A1- 2 925 473
- WO-A1-2011/061166
- WO-A1-2014/082870
- DE-A1- 19 726 421
- IT-B- 1 188 065
- US-A- 1 909 344

## Description

### Technical Field

The invention relates to metal sleeves that are used as the carrier of the abrasive layer of a saw beads, and in particular to a metal sleeve according to the preamble of claim 1. Such beads are threaded on a steel cord and separated from another with injection moulded polymer thereby forming a saw cord. The invention also relates to a method according to the preamble of claim 13, to produce such a metal sleeve.

### Background Art

Saw cords for sawing natural stones or manmade stony materials (such as concrete or bricks) have more and more become popular to exploit quarries and to cut large blocks of stone into slabs. Saw cords generally comprise a steel cord of diameter of 3.5 or 5 mm on which saw beads are strung. These saw beads are separated from one another by polymer sleeves, formed between the beads by injection moulding.

The beads themselves are made of a small metal sleeve on which an abrasive layer is fixed. The abrasive layer contains diamond particles held in a metal matrix. The abrasive layer can be made by sintering metal powder mixed with diamonds in a ring shaped compact. The ring is subsequently brazed onto the metal sleeve. An alternative method for making saw beads has recently been suggested by laser cladding (see WO 2012/119946 and WO 2012/119947) whereby the abrasive layer is directly fixed onto the metal sleeve.

The inner diameter (ID) of the metal sleeve is slightly larger than the diameter of the steel cord. For example for a 3.5 mm cord diameter the ID of the metal sleeve is between 3.6 to 3.9 mm. The outer diameter (OD) of the sleeve is about 5 mm. With the abrasive layer on top the diameter of the bead becomes 7 to 7.5 mm in diameter. The length of the metal sleeve is from 11 to 12 mm.

As all forces and torques between the abrasive layer that contacts the material to be cut and the steel cord have to pass through the tiny metal sleeve, the fixation of the metal sleeve and the steel cord is all important to the performance of the saw cord. The brazed bond or alloyed bond between abrasive layer and metal sleeve is generally rigid and strong and poses less of a problem.

As the cord and polymer are relative flexible materials and the metal sleeve is rigid, the interface between sleeve and cord is heavily loaded during use. After analysing numerous failed saw cords from the field, the inventors identified the following failure modes:
a. Due to the repeated bending of the cord in the rigid metal sleeve, the rims of the sleeve tend to contact the steel cord, thereby rubbing the steel filaments and fretting them through. This failure mode can be overcome by a metal sleeve inner shape of which the axial middle part is cylindrical while chamfered towards the ends of the metal sleeve. The chamfered ends also allow the ingress of polymer between the clearance between the steel cord and the inner surface of the metal sleeve. Specific shapes have been suggested in PCT/EP2013/073905 of the current applicant.
b. Furthermore the axial force transferred to the metal sleeve by the cord may lead to beads that are shifting longitudinally along the steel cord. This problem may be overcome by ensuring a good bond between the cord and the polymer by using an adhesive primer such that the beads are held by the polymer sleeves. Adhesive primers have been suggested in WO 2011/061166 of the current applicant. Also the mechanical anchorage of the metal sleeve to the steel cord can be improved by providing a helical threading to the inner surface of the metal sleeve. Both have resulted in a greatly reduced failure mode due to axial movement of the beads.
c. During use, the saw cord is made to rotate along its longitudinal axis to ensure an even wear of the abrasive layer. This rotation is induced to the cord by putting sheaves with a U - profile in the saw machine under a small angle such that the cord 'rolls down' from the sheave flange. This 'rolling down' exerts a torque on the bead, that is transferred to the cord. The steel cord itself is composed of steel wire strands that are wound around each other with a lay length and direction. The direction of rolling of the saw cord must be in the 'closing' direction of the steel cord as otherwise the cord would twist open. The 'closing' direction of a steel cord is that direction that tends to shorten the lay length of the cord.

The analysis of the inventors showed that many saw cords still fail due to rotation of the beads on the saw cord. The mode of failure goes as follows:
1. Due to the repeated (about 3 to 6 times per second, in normal operation conditions) short torque impact on the beads when entering the U-shaped groove of the sheave, a single bead is wicked out of position. The single bead may be somewhat weaker than the rest, for example because not enough polymer has ingressed between metal sleeve and steel cord during polymer injection (the bead having been in the end position of the injection mold for example).
2. After some time, the bead can freely rotate on the steel cord, and there is no adhesion or anchorage anymore between bead and steel cord. The bead remains in axial position as the polymer spacers keep the bead axially in position. Now at each sheave entry, the bead is rotated relative to the cord: there is no torque transfer from bead to steel cord. The inventors estimate that the bead makes about one turn per second around the steel cord in normal operation conditions.
3. This movement further wears the thin polymer layer between steel cord and the inner side of the bead sleeve. After the polymer layer is worn out, the steel filaments are in contact with the metal sleeve of the bead. As now stone dust and water can ingress the gap between the steel cord and bead sleeve, the filaments are efficiently ground away.
4. Finally the cord breaks at the rotating bead at the working tension, as the cord is weakened by the circularly worn out steel cord filaments.

A single bead can therefore induce the failure of a complete saw cord containing 400+ beads in less than 10 % of its normal life time expectancy.

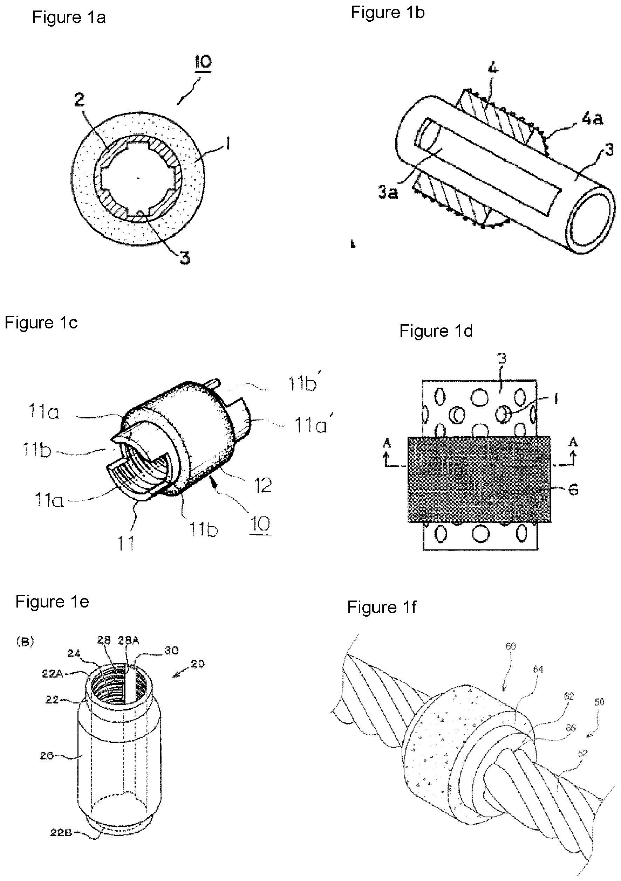

The problem of 'rotating saw beads' is known, and many suggestions have already been made to solve this problem, of which some of them are depicted in Figures 1a to 1f:
Figure 1a. In JPH0259273A it is suggested to provide the metal sleeve '2' with axially extending grooves '3'. Although this will improve torque resistance it will decrease axial holding force.
Figure 1b. In the metal sleeve '3' of JPH07156134A a slot '3a' is made over about the whole length of the sleeve. This slot will helps to increase torque resistance and axial holding force. However, the inventors are of the opinion that this slot mechanically weakens the sleeve too much.
Figure 1c. In publication KR0128010Y1 the metal sleeve '11' is provided with an internal threading as well as cut-outs '11b' wherein polymer is injected. Although this will improve both torque resistance and holding force, the cut-outs induce preferred bending directions and also weaken the ends of the metal sleeve. It is expected that protruding parts '11a' will or be bent away, or will damage the filaments of the steel cord.
Figure 1d. In JP2000176737A it is suggested to make holes '1' into the metal sleeve '3' whereon then the abrasive ring '6' is brazed. The holes provide for a good anchorage of the polymer as well as the braze metal. However, the inventors are of the opinion that the many holes weaken the mechanical strength of the sleeve severely.
Figure 1e. In JP2009023041A, it is suggested to have a longitudinal groove '30' made to the inner surface of the metal sleeve '22' in combination with a threaded inner surface. Again, according the inventors, the groove '30' forms a preferred fracture line for the sleeve.
Figure 1f. In KR20120115799A the inner part '66' of the sleeve '62' is made to fit to the 'threading' formed by the outer strands of the steel cord '52'. Although this will result in a very good resistance to axially directed load as well as torque resistance in combination with a good mechanical strength of the sleeve, the bead must be screwed over the whole length of the steel cord to put it in position. This makes the solution rather impractical.

Publication US1909344 describes a swaged connection to a layered steel cord. Attaching saw beads by swaging the sleeve to the steel cord has been suggested (EP0213434) but never realised in the field. Swaged attachments may damage the outer filaments of the steel cord and increase the bending stresses at the filaments leading to premature failures.

Publication EP 2925473 A0 describes a metal sleeve for use as a carrier of an abrasive layer of a sawing bead that is made by metal injection moulding. Also the method of metal injection moulding to make such bead is described. This publication is an Article 54(3) EPC prior art.

The inventors propose an alternative and better solution.

### Disclosure of Invention

The object of the current invention is therefore to provide a metal sleeve that ensures axial holding force and resists torque between the steel cord and the sawing bead. The metal sleeve does not induce preferred bending directions and is mechanically sufficiently strong. Also a method to produce such a metal sleeve is provided that allows to produce the metal sleeve in an economical way.

According a first aspect of the invention a metal sleeve according to claim 1 is presented. The metal sleeve is suitable as a carrier for the abrasive layer of a saw bead. The saw bead is for mounting on a saw cord. The metal sleeve is of substantially tubular shape and has a radial outer surface and a radial inner surface. The sleeves are made of metal for example steel. Typical sizes of the sleeves are 4.0, 4.4, 4.7, 5.0, 6.0 or 7.0 mm outer diameter with a length of 10, 11 or 12 mm. The wall thickness of the sleeve takes values of between 0.5 to 0.7 mm.

According to the invention, the inner surface of the metal sleeve is provided with a first set of parallel grooves in the axial first part of the metal sleeve and a second set of parallel grooves in the axial second part of the metal sleeve. These first and second set of grooves meet at a meeting plane. Both sets of grooves have a groove angle relative to the axis of the metal sleeve, a groove offset at said meeting plane and a groove spacing perpendicular to the grooves. At least one of the groove angle, groove offset and groove spacing is different between the first set of grooves and the second set of grooves.

Each of these parameters (angle, offset and spacing) can be expressed as a numerical value: the groove angle can be expressed in degrees or radians, the groove offset in a number of degrees, radians or in microns (the latter is obtained by multiplying the number of radians with the inner radius of the sleeve) and the groove spacing in microns.

More specifically: there are three combinations in which only one of the three parameters is different between both sets, there are three combinations in which two of the three parameters are differing, and there is one combination where all three parameters differ between the first and second set.

With 'differ' or 'differing' is meant that the numerical difference between the parameters is different from zero. If the difference is zero, the parameters are equal. This is independent from the units as long units are consistent between both sets of grooves. For example, the offset of the grooves at the meeting plane is zero when all grooves end at the same circumferential position. As soon as one groove is not ending at the same position, there is a difference in groove offset. It follows that if the number of helices in the first groove set is different from that in the second groove set, the groove offset cannot be zero.

Grooves are parallel. With this is meant that when the inner surface is 'rolled' open in a plane, the grooves would be present in parallel lines. When considered in three dimensions, the grooves form co-axial helices of the same pitch and diameter but shifted over the groove spacing, in the direction perpendicular to the helix.

Groove angles are measured on a metal sleeve cut in a plane comprising the axis of the sleeve. The inside of the sleeve is observed, and the angle is measured close to the axis of the sleeve. Groove angles have a sign. When starting from the axis of the metal sleeve towards the groove direction over the smallest rotation (i.e. covering an acute angle, smaller than 90°) the angle is positive when the rotation is in the anticlockwise direction and negative when in the clockwise direction. Alternatively formulated: the sign of the groove angle corresponds to the handedness of the helicoidal groove in the inner surface of the metal sleeve. A negative sign corresponds to the S-orientation of the helicoidal groove (left handed screw), a positive sign to the Z-orientation (right handed screw). The magnitude of the groove angle corresponds to the helix angle.

The magnitude of any groove angle may vary between 0° to 86° or more preferred between 25° to 75°. Values between 30° and 60° for example around 45° give a good balance between torsion resistance and axial holding force.

Groove spacing is measured perpendicular to the grooves and is from one feature of the first groove to the corresponding feature on the next groove. The feature can for example be the radial farthest point of the groove (the 'valley') or the radial closest point (the 'crest') between grooves. The groove spacing is always a non-zero, positive number.

The meeting plane is where the grooves of the first end stop and the grooves of the second end start (or vice versa). It is perpendicular to the axis of the sleeve. The meeting plane divides the axial length of the sleeve into an axial first part and an axial second part. The meeting plane can be for example at 1/3^{rd} of the axial length of the sleeve. The first part extends then from one end of the sleeve to 4 mm and the second part from 4 mm to the end at 12 mm, for a 12 mm long sleeve.

The effect of the difference in at least one of the parameters groove spacing, groove offset or groove angle is that the sleeve is blocked in the polymer not only in the axial direction, but also in the circumferential direction.

In a first preferred embodiment, the meeting plane is at the axial middle of the sleeve.

In a second preferred embodiment, the groove angle of the first and second set have an opposite sign. For example the first groove set may have a negative sign (S, left hand helix), while the second groove set then must have a positive sign (Z, right hand helix).

In a further refined embodiment thereof, the magnitude of the groove angles may be equal.

A case of specific interest is where one of the groove angles is zero and the other groove angle is different from zero. The zero angle grooves run parallel to the axis of the sleeve thereby preventing rotation of the sleeve, while the other set is obliquely oriented thereby preventing axial displacement of the sleeve.

Another case of specific interest is that the groove spacing and the groove angle of the first and second set are equal, but both groove sets are offset to one another. The offset is about half of the groove spacing. So the crests of one groove set end at the valleys of the other groove set, thereby providing axial anchorage. The case that the groove angle of both sets is zero is also a considered embodiment.

In a further highly preferred embodiment the axial middle section of the inner surface is substantially cylindrical over a length of between 0.25 to 0.75 times the axial length of the sleeve. The end sections axially outside of this middle section have chamfered openings. The chamfered openings have a radius of curvature between 10 and 30 mm. Preferably the chamfered openings smoothly go over into the cylindrical middle piece (i.e. the zero and first order derivative in axial direction of the inner surface is continuous).The chamfered openings allow for better ingress of polymer into the clearance between metal sleeve and steel cord during polymer injection. Additionally, they prevent that outer filaments of the steel cord are damaged during use by the edge of the sleeve.

The outer surface of the metal sleeve is nowadays of a cylindrical shape. In a preferred embodiment of the invention, the outer surface is substantially cylindrical but has one or more axially oriented flat faces. The flat faces span an angle of 15° or less, but in any case more than 3°, as measured from the axis of the sleeve. The presence of the flats helps to disengage the sleeves from the mould in the metal injection moulding. Preferably two flats are present on the outer surface of the sleeve, said flats being positioned diametrically against one another.

According a second aspect of the invention, a saw bead is described, that comprises a sleeve and an abrasive layer. Characteristic about the saw bead is that the metal sleeve is according the description above. A particularly preferred embodiment is when the saw bead is made according a laser cladding process as described in WO 2012/119946 and WO 2012/119947 of the current applicant. The process results in a dendritic metallographic microstructure of the abrasive layer.

According a third aspect of the invention, a saw cord is claimed. The saw cord comprises a steel cord and saw beads threaded thereon. The saw beads are separated by polymer spacers. The steel cord comprises strands twisted together with a certain lay length and direction. Specific about the saw cord is that saw beads are used whereof the metal sleeve is according to the ones described here before.

A preferred embodiment of the saw cord is the one with metal sleeves whereof the groove angle of the first set has an opposite sign to that of the second set. The first groove set may have a negative sign (S, left hand helix), while the second groove set then must have a positive sign (Z, right hand helix). Or just the opposite. In both cases the grooves represent a circumferential arrow direction. Note that the arrow beheld is the one in the sleeve half closest to the eye of the beholder (not the one in the half farthest away, which is of course is oppositely directed). The saw beads are mounted such that the arrow direction of the grooves in the metal sleeve is opposite to the twist direction that shortens the lay length of the steel cord. This is the direction that closes the cord i.e. the strands are tightened against one another.

As mentioned in [0007], item 'c.' the saw cord is made to rotate during use. Rotation is in the direction that closes the cord. If now the saw bead would be mounted such that the arrow of the grooves follows the direction of closure, the grooves would tend to push polymer axially outward of the bead and carve out the polymer. By mounting them oppositely, the polymer is pushed to the centre thereby providing a better grip between polymer and sleeve.

According to the invention, a method according to claim 13 to produce a metal sleeve according to any one of claims 1-8 is provided. Basically the method is an inventive adaptation of the metal injection process as described in WO2014082870 A1 from the same applicant.

Another method not according to the invention comprises the following steps :
1. Providing a mixture of metal powder and binder
   i. Binders are mixtures of organic molecules such as paraffin wax, polyolefins (such as polyethylenes, polypropylenes, polystyrenes, polyvinylchlorides, polyethyleneglycol, polyoxymehtylene and many others) and stearic acids.
   ii. Preferably the metal powder is based on a steel compostion comprising up to 0.8 wt% of carbon, less than 0.5 wt% of silicon, and one or more metals out of the group comprising nickel, manganese, molybdenum, chromium, copper the balance being iron

   The binder and metal powder are thoroughly mixed into a paste.
2. Providing a mould having a mould cavity. The mould cavity is formed by an outer shell having an interior surface and a first and second pin enterable and retractable form the opposite ends of the outer shell. The pins meet one another at the position corresponding to the meeting plane of the later to be formed metal sleeve. The pins are tapered toward the meeting plane i.e. they have a non-increasing diameter towards the centre of the mould.
   The interior surface of the outer mould can e.g. be formed of two half-moulds that, when closed, form the mould cavity. The closed two half-moulds forms a cylinder with two axially oriented flats where the half moulds meet.
3. The mixture is injected into the mould cavity. Injection is usually done with a ram press or plunger injection screw through injection holes in the mould.
4. The first and second pins are retracted, and the green sleeve is removed from the outer shell. This can be done by opening the outer shell or by axially pushing the green sleeve out of the outer shell.
5. Thereafter the green sleeve is freed from its binder by heat or a catalytic reaction that removes the binder. The resulting sleeve is called a brown sleeve.
6. The brown sleeve is sintered in a protective atmosphere above the melting point of the metal powder, whereby the powder particles coalesce to a solid sleeve.

The colours 'green' and 'brown' are customarily used in the field of metal injection moulding but do not indicate the true colour of the sleeve. They are merely used as indicators of the status in the process, and are not limitative to the claim.

Differing from WO2014082870 A1 and according to the invention as defined by the features of claim 13 is that the first pin has a first protruding screw thread with a first screw angle and first screw spacing, and the second pin has a second protruding screw thread with a second screw angle and second screw spacing, the first and second screw thread meeting one another at the meeting plane with a screw phase angle, wherein the first and second screw thread is different from another in at least one of the screw angle, the screw spacing or the screw phase.

With 'different from one another' is meant that the numerical value of for example the screw angles are different. The screw phases are different from one another as soon as one screw of the first screw threads does not meet with a corresponding screw of the second screw thread. Only when all individual screws of the first and second screw thread meet at the same circumferential position, the phases of both screws are equal.

It goes without saying that, in order to remove the pins from the mould, they must be turned in their appropriate screw direction. The flats help to keep the green sleeve in position when the first and second pins are turned out of the green sleeve.

A particular preferred embodiment of the method is that the first and second screw thread have an opposite handedness: if the first screw thread is 'S' handed, the second screw tread is 'Z' handed or inversely.

In another, easy to realise embodiment, the first and second screw thread have equal screw angle and screw spacing but differ in phase angle at the meeting plane. In other words: the combined screw thread shows a discontinuity at the meeting plane, as the screws do not exactly match there.

### Brief Description of Figures in the Drawings

Figure 1a: bead and sleeve according JPH0259273A
Figure 1b: view of bead and sleeve according JPH07156134A
Figure 1c: bead and sleeve in perspective as in KR0128010Y1
Figure 1d: bead and sleeve as depicted in JP2000176737A
Figure 1e: bead and sleeve as JP2009023041A
Figure 1f: bead and sleeve on cord KR20120115799A.
Figure 2: bead and sleeve according a first embodiment of the invention
Figure 3: bead and sleeve according a second embodiment of the invention.
Figure 4: overview of the different possible parameter combinations
Figure 5a and 5b : saw cord with saw bead having sleeve with a groove direction relative to the lay direction of the steel cord.

### Mode(s) for Carrying Out the Invention

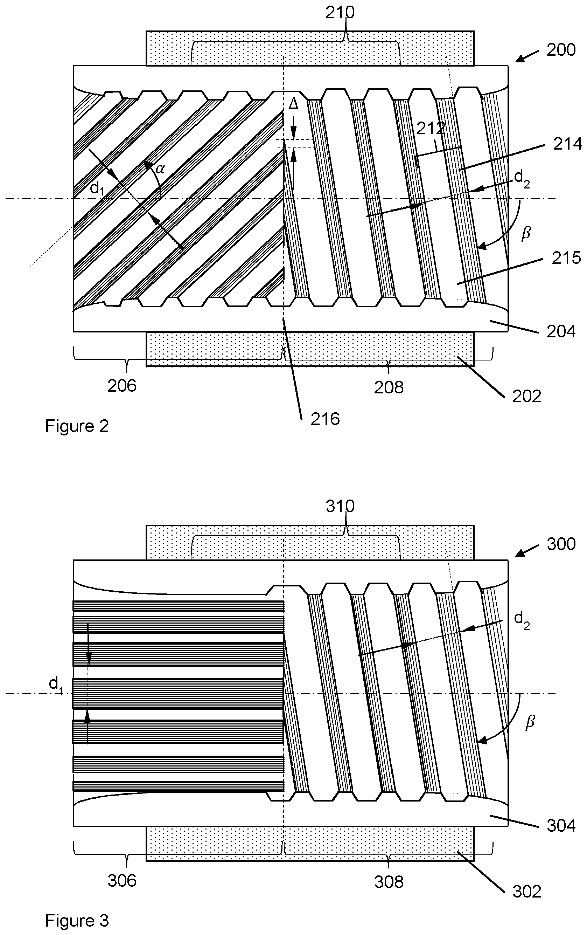

In figure 2 an exemplary saw bead 200 according the invention is depicted. The bead is cut in half and the inner surface of the sleeve is visible. At the outside the abrasive layer 202 is indicated. The sleeve 204 is made out of a single piece of metal. There is an axial first part 206 and an axial second part 208. In each part a set of parallel helical grooves 212 has been made. Each groove 212 has a crest 214 (indicated hatched) and a valley 215. The spacing of the first set is indicated with 'd₁', the spacing of the second set with 'd₂'. The spacing is measured perpendicular to the groove helix. The grooves of the first and second set meet at a meeting plane 216. In this example the meeting plane 216 is about at the middle. In the Example, 'd₁ = 1.10 mm' while 'd₂ = 0.95 mm'.

Both sets of grooves have a groove angle indicated with 'α' and 'β'. According the convention taken in this application, the angle 'α' has a positive sign (the turning over the smallest angle is in the anti-clockwise direction), while 'β' has a negative sign (the turning over the smallest angle is in the clockwise direction). The handedness of both groove sets is opposite. The first part 206 has a right hand screw direction (Z) while the second part 208 has al left hand screw direction (S). It is to be remembered that the grooves are seen from the inside. In this particular example 'α = 45°' while 'β = 80°'.

The groove offset, indicated with 'Δ', is in this case differing from zero as the number of grooves in both parts is differing. In case the number of grooves is differing, the groove offset can never be zero (as at least one groove will not have a counterpart in the other set).

The metal sleeve shows a substantially cylindrical middle section 210. The length of this middle section is about half of the total length of the metal sleeve. The end sections outside the middle sections are chamfered.

Another embodiment is depicted in Figure 3. The main difference with the previous example is that the first groove angle 'α' is now zero. All other parameters are identical.

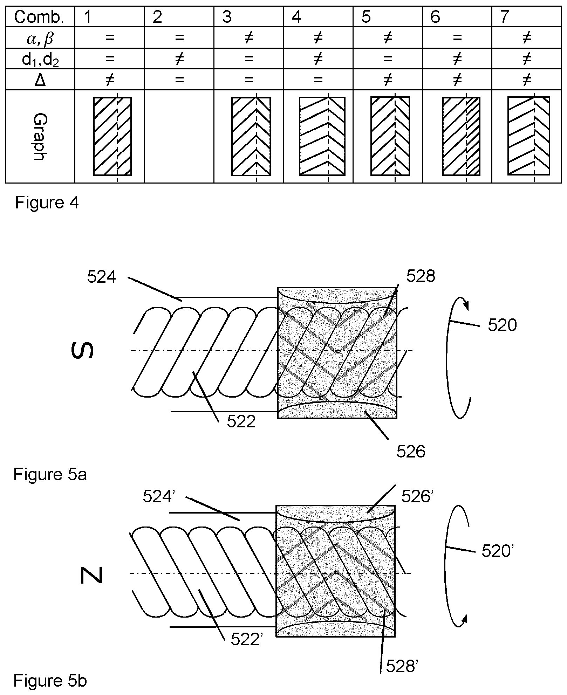

Figure 4 depicts the different combinations that are possible. In 'combination 1', the only difference between the parameters is that the groove offset is different i.e. not zero between both groove sets. Groove angle and distance are equal. Combination 2 cannot be realised as the number of grooves in each set will be different, hence the groove offset can never be equal i.e. the difference in groove offset cannot be zero. In combination 3 'β = -α' i.e. the angles have the reverse sign. The graphs of Combinations 4 to 6 show embodiments where only one parameter is equal. The inventors find combinations 3, 4, 5 and 7 the best. Graph 1 is easiest to realise in practice.

The metal sleeves can easily be made in a mould similar to the one described in WO2014082870 A1 from the same applicant, more particularly paragraphs [70] to [73], in conjunction with figures 3a, 3b, 4a and 4b. The difference between the prior art mould and the current mould is that the first and second pins that are enterable into the outer shell have a different screw angle and/or screw spacing. The screw angle and spacing of the first and second enterable or insertable pin imprint into the green sleeve thereby forming the grooves of the first and second set with the corresponding groove angle and spacing as the negative of the screw.

Typically, the following ingredients can be used to make a metal sleeve by means of metal injection moulding:
A first type of feedstock is available from PolyMIM® and
- MIM 2200 FN02 Nominal alloy composition:
   Ni (1.5 to 2.5 wt%), Mo (0.5 wt% max), Si (1.0 wt% max), C (0.1 wt% max), Fe (the balance).
- MIM 2200 FN08 Nominal alloy composition:
   Ni (6.5 to 8.5 wt%), Mo (0.5 wt% max), Si (1.0 wt% max), C (0.4 - 0.6 wt%), Fe (the balance).
- MIM 17-4 PH Nominal alloy composition:
   Cr (15 -17.5 wt%), Ni (3.0 - 5.0 wt%), Mn (1.0% max), Si (1.0 wt% max), Cu (3.0 to 5.0 wt%), C (0.07% max), Fe (the balance).

The PolyMIM system allows for water based debinding of the green sleeve (demin water at 40-60°C for about 5 hours, plus 2 hours drying). In the PolyMIM system the mold is kept at 40 to 60°C, the temperature of the feedstock at the nozzle at 190°C while an injection pressure of between 750 to 950 MPa is needed. Feed rate is between 3 to 25 cm³/s.

A second feedstock is according the Catamold® system of BASF (see e.g. US5802437):
- Stainless steel 316L Nominal alloy composition:
   Cr (16-18 wt%), Ni (10-14 wt%), Mo (2-3 wt%), Mn (2.0 % max), Si (1.0 % max), C (0.03% min), Fe (the balance).

The Catamold® system is based on catalytic debinding at 110°C in a HNO₃ environment (afterburn required).

Sintering cycles are prescribed by the feedstock supplier. Typically they include a hold step for about 1 to 2 hours at 600°C and a 2 to 3 hour hold step at final temperature (1290°C to 1380°C depending on the alloy). The sintered sleeves showed a good density of over 95 % of the theoretically possible density. In an metallographic cross section micron sized (1 to 5 µm) pores remain visible. This is evidence that sleeves have been made by metal injection moulding.

After the abrasive layer has been applied on the sleeve either by laser cladding or by brazing a ring of sintered metal powder with diamond onto the sleeve, the sleeve must be correctly mounted on the saw cord. This is illustrated in Figures 5a and 5b for respectively an 'S' and 'Z' handed steel cord 522 and 522'. For a left hand 'S' cord the closing direction is indicated by arrow 520. Turning the cord end in that direction will tend to shorten the lay length of the steel cord 522. This is also the direction of the torque exerted on the saw bead during sawing, in order to make the bead and rope rotate. The cord is coated with a polymer 524 that also fills the gap between the metal sleeve 526 and the steel cords 522.

In the semi-transparent metal sleeve the grooves are indicated with lines 528. Only the grooves in the nearer half of the sleeve are indicated and the form is as an arrow indicating a direction that is opposite of the closing direction of the cord 520. Figure 5b is actually just the mirror image of Figure 5a and illustrates the orientation of the arrows in the case of a 'Z' type cord. The inventors found that in this way the bead does not start to rotate relative to the steel cord, thereby solving the problem of 'saw bead rotation'.

## Claims

1. A metal sleeve (526) for use as a carrier for the abrasive layer (202) of a saw bead (200) in a saw cord (520), said metal sleeve having a radial outer surface and a radial inner surface
**characterised in that**
said inner surface is provided with a first set of parallel grooves in the axial first part of said metal sleeve and a second set of parallel grooves in the axial second part of said metal sleeve, said first and second set meeting at a meeting plane (216), said first and second set of parallel grooves each having a groove angle (α,β) relative to the axis of said metal sleeve, a groove offset (Δ) at said meeting plane and a groove spacing (d1,d2) perpendicular to the grooves, said first set and said second set of parallel grooves differing in at least one of the groove angle, groove offset and groove spacing.

2. The metal sleeve of claim 1 wherein said meeting plane is in the axial middle of said sleeve.

3. The metal sleeve according to any one of claims 1 to 2 wherein said groove angle of said first set has an opposite sign to that of said second set.

4. The metal sleeve according to claim 3 wherein the magnitude of said groove angle is equal.

5. The metal sleeve according to any one of claims 1 to 2 wherein one of the groove angles of said first or second set is zero.

6. The metal sleeve according to any one of claims 1 to 2 wherein said groove spacing and said groove angle of said first and second set is equal and said offset is about half of said groove spacing.

7. The metal sleeve according to any one of claims 1 to 6 wherein the axial middle section of said inner surface is substantially cylindrical over a length of between 0.25 to 0.75 times the axial length of said sleeve and wherein the sections axially outside of said middle section have chamfered openings.

8. The metal sleeve according to any one of claims 1 to 7 wherein said outer surface is substantially cylindrical with one or more axially oriented flat faces.

9. A saw bead (200) comprising a metal sleeve (526) and an abrasive layer (202)
**characterised in that**
said metal sleeve is according any one of claims 1 to 8.

10. The saw bead of claim 9 wherein said abrasive layer shows a dendritic metallographic microstructure obtained by laser cladding.

11. A saw cord comprising a steel cord and saw beads threaded thereon, wherein said beads are separated by polymer spacers,
**characterised in that**
said saw beads comprise sleeves according to any one of claims 1 to 8.

12. The saw cord according claim 11, said steel cord comprises strands twisted together according a lay length and direction, wherein said sleeves are according to claim 3, where said first and second set of grooves represent an arrow direction, said arrow direction being opposite to the twist direction that shortens said lay length.

13. A method to produce a metal sleeve (526) according to any one of claims 1 to 8 comprising the steps of:
- Providing a mixture of metal powder and binder
- Providing a mould having a mould cavity, formed by an outer shell having an interior surface and a first and second pin enterable and retractable from the opposite ends of said outer shell, said first and second pin meeting one another at a meeting plane (216), said pins being tapered towards said meeting plane;
- Injecting said mixture into said mould cavity thereby forming a green sleeve;
- Ejecting said green sleeve from said mould by retracting said first and second pin, and removing the green sleeve out of the outer shell;
- Freeing said green sleeve from said binder thereby forming a brown sleeve;
- Sintering said brown sleeve to final shape;
**characterised in that**
said first pin has a first protruding screw thread with a first screw angle and first screw spacing, said second pin has a second protruding screw thread with a second screw angle and second screw spacing, said first and second screw thread meeting one another at said meeting plane with a screw phase, wherein said first and second screw thread are different from one another in at least one of the screw angle, the screw spacing, and the screw phase.

14. The method of claim 13 wherein said first and second screw thread have an opposite handedness.

15. The method of claim 13 wherein said first and second screw thread have equal screw angle and screw spacing and differ in screw phase angle at said meeting plane.

## Patentansprüche

1. Metallhülle (526) zur Verwendung als Träger für die Schleifschicht (202) eines Sägekügelchens (200) in einem Sägeband (520),
wobei die Metallhülle eine radiale Außenseite und eine radiale Innenseite aufweist,
**dadurch gekennzeichnet, dass**
die Innenseite mit einem ersten Satz von parallelen Rillen in dem axialen ersten Teil der Metallhülle und einem zweiten Satz von parallelen Rillen in dem axialen zweiten Teil der Metallhülle ausgestattet ist, wobei der erste und der zweite Satz sich in einer Begegnungsebene (216) begegnen,
der erste und der zweite Satz von parallelen Rillen jeweils einen Rillenwinkel (α, β) relativ zu der Achse der Metallhülle, einen Rillenversatz (Δ) an der Begegnungsebene und einen Rillenabstand (d1, d2) senkrecht zu den Rillen aufweisen, wobei der erste Satz und der zweite Satz von parallelen Rillen sich mindestens in dem Rillenwinkel, dem Rillenversatz und dem Rillenabstand unterscheiden.

2. Metallhülle nach Anspruch 1, wobei die Begegnungsebene die axiale Mitte der Hülle ist.

3. Metallhülle nach einem der Ansprüche 1 bis 2, wobei der Rillenwinkel des ersten Satzes ein Vorzeichen aufweist, das zu demjenigen des zweiten Satzes entgegengesetzt ist.

4. Metallhülle nach Anspruch 3, wobei die Größe des Rillenwinkels gleich ist.

5. Metallhülle nach einem der Ansprüche 1 bis 2, wobei einer der Rillenwinkel des ersten oder zweiten Satzes Null ist.

6. Metallhülle nach einem der Ansprüche 1 bis 2, wobei der Rillenabstand und der Rillenwinkel des ersten und zweiten Satzes gleich sind und der Versatz ungefähr die Hälfte des Rillenabstands beträgt.

7. Metallhülle nach einem der Ansprüche 1 bis 6, wobei der axiale Mittelabschnitt der Innenseite über eine Länge zwischen dem 0,25- bis 0,75-fachen der axialen Länge der Hülle im Wesentlichen zylindrisch ist, und wobei die Abschnitte axial außerhalb des Mittelabschnitts abgeschrägte Öffnungen aufweisen.

8. Metallhülle nach einem der Ansprüche 1 bis 7, wobei die Außenseite im Wesentlichen zylindrisch ist, mit einer oder mehreren axial orientierten planen Flächen.

9. Sägekügelchen (200), umfassend eine Metallhülle (526) und eine Schleifschicht (202), **dadurch gekennzeichnet, dass** die Metallhülle nach einem der Ansprüche 1 bis 8 ist.

10. Sägekügelchen nach Anspruch 9, wobei die Schleifschicht eine durch Laserstrahl-Auftragschweißen erhaltene dendritische metallografische Mikrostruktur zeigt.

11. Sägeband, umfassend ein Stahlband und darauf gefädelte Sägekügelchen, wobei die Kügelchen durch Polymerdistanzstücke getrennt sind, **dadurch gekennzeichnet, dass** die Sägekügelchen Hüllen nach einem der Ansprüche 1 bis 8 umfassen.

12. Sägeband nach Anspruch 11, wobei das Stahlband Stränge umfasst, die gemäß einer Schlaglänge und -richtung miteinander verdrillt sind, wobei die Hüllen gemäß Anspruch 3 sind, wobei der erste und zweite Satz von Rillen eine Pfeilrichtung darstellt, wobei die Pfeilrichtung der Verdrillungsrichtung entgegengesetzt ist, welche die Schlaglänge verkürzt.

13. Verfahren zur Herstellung einer Metallhülle (526) nach einem der Ansprüche 1 bis 8, umfassend die Schritte:
- Bereitstellen einer Mischung aus Metallpulver und Bindemittel;
- Bereitstellen einer Form mit einem Formhohlraum, der durch einen Außenmantel mit einer Innenoberfläche gebildet wird, und einem ersten und zweiten Stift, die von den entgegengesetzten Enden des Außenmantels einbringbar und zurückziehbar sind, wobei der erste und der zweite Stift sich an der Begegnungsebene (216) begegnen, wobei die Stifte sich in Richtung der Begegnungsebene verjüngen;
- Einspritzen der Mischung in den Formhohlraum, wodurch eine grüne Hülle gebildet wird;
- Auswerfen der grünen Hülle aus der Form durch Zurückziehen des ersten und zweiten Stiftes und Entfernen der grünen Hülle aus dem Außenmantel;
- Befreien der grünen Hülle von dem Bindemittel, um dadurch eine braune Hülle zu bilden;
- Sintern der braunen Hülle zu der endgültigen Form;
**dadurch gekennzeichnet, dass**
der erste Stift ein erstes vorragendes Schraubgewinde mit einem ersten Schraubwinkel und erstem Schraubenabstand aufweist, der zweite Stift ein zweites vorragendes Schraubgewinde mit einem zweiten Schraubwinkel und zweiten Schraubenabstand aufweist, wobei das erste und das zweite Schraubgewinde sich an der Begegnungsebene mit einer Schraubphase begegnen, wobei sich das erste und das zweite Schraubgewinde voneinander in mindestens einem von dem Schraubwinkel, dem Schraubenabstand und der Schraubphase unterscheiden.

14. Verfahren nach Anspruch 13, wobei das erste und zweite Schraubgewinde eine entgegengesetzte Händigkeit aufweisen.

15. Verfahren nach Anspruch 13, wobei das erste und zweite Schraubgewinde gleiche Schraubwinkel und gleichen Schraubenabstand aufweisen und sich im Schraubphasenwinkel an der Begegnungsebene unterscheiden.

## Revendications

1. Manchon en métal (526) pour l'utilisation en tant que support pour la couche abrasive (202) d'une bille de scie (200) dans un câble de scie (520),
ledit manchon en métal ayant une surface extérieure radiale et une surface intérieure radiale,
**caractérisé en ce que**
ladite surface intérieure est pourvue d'un premier ensemble de rainures parallèles dans la première partie axiale dudit manchon en métal et d'un second ensemble de rainures parallèles dans la seconde partie axiale dudit manchon en métal, lesdits premier et second ensemble se rencontrant à un plan de rencontre (216),
lesdits premier et second ensemble de rainures parallèles ayant chacun un angle de rainure (α, β) par rapport à l'axe dudit manchon en métal, un décalage de rainure (Δ) audit plan de rencontre et un espacement de rainure (d1, d2) perpendiculaire aux rainures, ledit premier ensemble et ledit second ensemble de rainures parallèles étant différents en au moins un de l'angle de rainure, du décalage de rainure et de l'espacement de rainure.

2. Manchon en métal selon la revendication 1, dans lequel ledit plan de rencontre est dans le milieu axial dudit manchon.

3. Manchon en métal selon l'une quelconque des revendications 1 à 2 dans lequel ledit angle de rainure dudit premier ensemble a un signe opposé à celui dudit second ensemble.

4. Manchon en métal selon la revendication 3, dans lequel l'amplitude dudit angle de rainure est égale.

5. Manchon en métal selon l'une quelconque des revendications 1 à 2, dans lequel un des angles de rainure dudit premier ou second ensemble est zéro.

6. Manchon en métal selon l'une quelconque des revendications 1 à 2, dans lequel ledit espacement de rainure et ledit angle de rainure desdits premier et second ensemble est égal et ledit décalage est environ la moitié dudit espacement de rainure.

7. Manchon en métal selon l'une quelconque des revendications 1 à 6, dans lequel la section de milieu axial de ladite surface intérieure est sensiblement cylindrique sur une longueur d'entre 0,25 à 0,75 fois la longueur axiale dudit manchon et dans lequel les sections axialement à l'extérieur de ladite section de milieu ont des ouvertures chanfreinées.

8. Manchon en métal selon l'une quelconque des revendications 1 à 7, dans lequel ladite surface extérieure est sensiblement cylindrique avec une ou plusieurs faces plates orientées axialement.

9. Bille de scie (200), comprenant un manchon en métal (526) et une couche abrasive (202), **caractérisée en ce que** ledit manchon en métal est selon l'une quelconque des revendications 1 à 8.

10. Bille de scie selon la revendication 9, dans lequel ladite couche abrasive présente une microstructure métallographique dendritique obtenue par placage laser.

11. Câble de scie, comprenant un câble en acier et des billes de scie enfilées sur celui-ci, dans lequel lesdites billes sont séparées par des éléments d'espacement en polymère,
**caractérisé en ce que** lesdites billes de scie comprennent des manchons selon l'une quelconque des revendications 1 à 8.

12. Câble de scie selon la revendication 11, ledit câble en acier comprend des torons torsionnés ensemble selon un pas et une direction de toronnage, dans lequel lesdits manchons sont selon la revendication 3, où lesdits premier et second ensemble de rainures représentent une direction de flèche, ladite direction de flèche étant opposée à la direction de torsion qui raccourcit ledit pas de toronnage.

13. Procédé pour produire un manchon en métal (526) selon l'une quelconque des revendications 1 à 8, comprenant les étapes de :
- la fourniture d'un mélange de poudre de métal et d'un liant,
- la fourniture d'un moule ayant une cavité de moule, formée par une coque extérieure ayant une surface intérieure et une première et seconde pointe pouvant être entrées et rétractées des extrémités opposées de ladite coque extérieure, lesdites première et seconde pointe se rencontrant l'une l'autre à un plan de rencontre (216), lesdites pointes étant effilées vers ledit plan de rencontre ;
- l'injection dudit mélange dans ladite cavité de moule, ainsi formant un manchon vert ;
- l'éjection dudit manchon vert à partir dudit moule en rétractant lesdites première et seconde pointe, et l'enlèvement du manchon vert hors de la coque extérieure ;
- la libération dudit manchon vert à partir dudit liant, ainsi formant un manchon brun ;
- le frittage dudit manchon brun en une forme finale ;
**caractérisé en ce que**
ladite première pointe a un premier filet de vis saillant avec un premier angle de vis et un premier espacement de vis, ladite seconde pointe a un second filet de vis saillant avec un second angle de vis et un second espacement de vis, lesdits premier et second filet de vis se rencontrant l'un l'autre audit plan de rencontre avec une phase de vis, dans lequel lesdits premier et second filet de vis sont différents l'un de l'autre en au moins un de l'angle de vis, de l'espacement de vis, et de la phase de vis.

14. Procédé selon la revendication 13, dans lequel lesdits premier et second filet de vis ont un sens de rotation opposé.

15. Procédé selon la revendication 13, dans lequel lesdits premier et second filet de vis ont un angle de vis et un espacement de vis égaux et diffèrent en angle de phase de vis audit plan de rencontre.
